(19) **Europäisches Patentamt / European Patent Office / Office européen des brevets**

(11) **EP 3 440 785 B1**

(12) # EUROPEAN PATENT SPECIFICATION

(45) Date of publication and mention
of the grant of the patent:
**26.02.2020 Bulletin 2020/09**

(51) Int Cl.:
**H04B 10/112** (2013.01)

(21) Application number: **16718333.4**

(22) Date of filing: **22.04.2016**

(86) International application number:
**PCT/EP2016/058996**

(87) International publication number:
**WO 2017/182095 (26.10.2017 Gazette 2017/43)**

(54) **APPARATUS AND METHOD FOR TRANSMITTING AN OPTICAL TRANSMISSION SIGNAL VIA SEPARATED FREE-SPACE OPTICAL PATHS**

VORRICHTUNG UND VERFAHREN ZUR ÜBERTRAGUNG EINES OPTISCHEN SENDESIGNALS ÜBER GETRENNTE OPTISCHE FREIRAUMWEGE

APPAREIL ET PROCÉDÉ POUR ÉMETTRE UN SIGNAL DE TRANSMISSION OPTIQUE PAR L'INTERMÉDIAIRE DE CHEMINS OPTIQUES SANS FIL SÉPARÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.02.2019 Bulletin 2019/07**

(73) Proprietor: **Huawei Technologies Co., Ltd.
Longgang District
Shenzhen, Guangdong 518129 (CN)**

(72) Inventors:
• **GOEGER, Gernot
80992 Munich (DE)**

• **YE, Yabin
80992 Munich (DE)**
• **SHI, Xiaozhong
80992 Munich (DE)**
• **ZHAO, Ping
80992 Munich (DE)**

(74) Representative: **Pfenning, Meinig & Partner mbB
Patent- und Rechtsanwälte
Joachimsthaler Straße 10-12
10719 Berlin (DE)**

(56) References cited:
**DE-A1-102014 213 442     US-A- 3 536 922
US-B1- 7 106 971**

**Description**

TECHNICAL FIELD

The present invention relates to apparatus for and method of transmitting an optical transmission signal via separated free-space optical paths of a spatial diverse free-space optical transmission system.

BACKGROUND

Steadily increasing data traffic to end users requires small meshed high capacity networks. Fiber optical data transmission is by far the most cost efficient solution. However, a connection to fiber infrastructure will not always be possible, and burying new fiber may be impossible for various reasons (e.g., due to natural blocking or private demesnes).

To some extent microwave wireless connections in the E-band frequency range can cover this last mile, but they suffer from several limitations, such as limited maximum data rate (rarely exceeding a few Gbit/s), continuous license fees for their operation, and ease of evesdropping/interception.

By contrast, free-space optical (FSO) transmission offers several orders of magnitude higher capacity, it is free of any license fee and is secure due to weak beam divergence and high directivity. It therefore may have important applications for front-haul data transport in advanced long term evolution (LTE-A) and especially 5G wireless networks which require lots of connections for CRAN baseband units (BBUs) to remote radio units (RRU) and/or antenna arrays due to the multitude of small picocells. If the current industry standard for these connections (i.e., common public radio interface, CPRI) is extended for the next generation of mobile networks, data rates will amount to more than 40Gbit/s for each BBU-to-RRU link.

As regards transmission characteristics of FSO transmission, channel conditions will vary strongly in comparison to fibre networks. Especially, wavefront distortions due to scintillation (i.e., temporally and spatially varying refractive index of turbulent air) and attenuation due to fog scattering introduce significant power fading. In order to provide a sufficiently high availability of FSO links, measures have to be taken to combat those detrimental effects and to increase the optical power margin or link margin. In an optical communications link, the optical power margin is the difference between the optical power that is launched by a given transmitter (TX) into the air channel, less transmission losses from all causes, and the minimum optical power that is required by the receiver for a specified level of performance. For typical European weather conditions and a link length of 500m, about 45dB margin is required for 99.99% availability.

Current approaches to maximize optical link margin and minimize link failure may include:

1) Increasing optical receiver (RX) sensitivity: depending on realization, several dB of sensitivity gain can be achieved by applying avalanche photodiodes (APD) and/or coherent detection of binary phase shift keying (BPSK) or quadrature phase shift keying (QPSK) modulation rather than direct detection of amplitude shift keying (ASK) signals.

2) Introducing optical signal amplification: single mode fiber (SMF) coupled signals can be amplified by Erbium doped fiber amplifiers (EDFAs) by up to several tens of dB.

3) increasing aperture size: increase of aperture size allows to reduce fading due to scintillation and to increase launch power (in Germany, DIN EN 60825-1, 1994 sets a limit of $1mW/mm^2$ for the maximum transmitter intensity). However, increasing aperture diameters is very costly. From 20cm diameter on, wavefront sensing (comparatively slow) and adaptive optics are required for efficient fiber coupling and sensing.

4) Improving channel coding: long interleaving codes can be used to cope with deep power fades of fractions of e.g. 1s duration. This approach is applicable in cases where no strict latency requirements have to be met.

5) Introducing spatial diversity: Combining signals from several transmitter(s) and receiver apertures increases robustness with respect to fading and transient blocking.

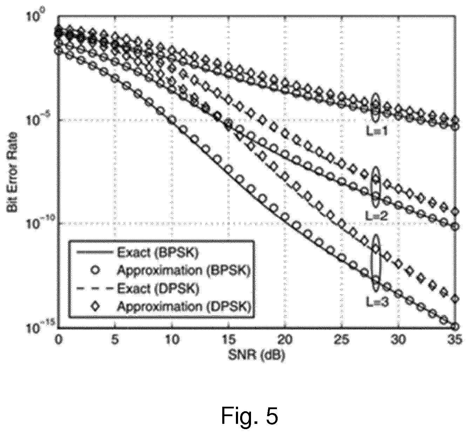

Fig. 5 shows a diagram of exact and approximated ergodic bit error rate (BER) over signal-to-noise ratio for BPSK maximal ratio combining (MRC) and differential PSK (DPSK) selection combining (SC) for different aperture counts (L= 1, 2, 3) in lognormal-Rician turbulence (r = 5, $\sigma_z^2 = 0.4'$) and independent fading in each branch. More details can be gathered from F. Yang et al., "Coherent Free-Space Optical Communications in Lognormal-Rician Turbulence", IEEE Comm. Lett., vol. 16, no. 11, 1872 (2012).

To fully profit from diversity, the apertures at TX and/or RX side should be placed at a distance further than the correlation length of the respective impairment. For intensity fading due to atmospheric turbulence the correlation length (i.e., Fried parameter) $r_0$ scales ~ path $length_{TX-RX}^{-0.6}$. Thus, for a transmission length of 100m, $r_0$ amounts to 2.4m whereas for a transmission length of 1000m, $r_0$ is reduced to 60cm. As can be seen in Fig. 5, significant reduction of required mean energy/bit/noise density can be achieved. A high average SNR gain can be achieved, e.g., about 15dB at BER of $10^{-5}$ by changing from one (L=1) to two (L=2) apertures.

In general, diversity can be achieved by temporal diversity on different polarization and on different wavelength channels (as described e.g. in the US 7 106 971 B1), by spatial diversity of signals on different optical paths where signals are combined in the electrical domain (as described e.g. in S.-H. Hwang et al., "SIM/SM-Aided Free-Space Optical Communication With Receiver Diversity", J. Lightw. Technol. 32, no. 14, 2443 (2014)) or in the in optical domain (as decribed e.g. in A. Belmonte et al., "Sequential Optimization of Adaptive Arrays in Coherent Laser Communications", J. Lightw. Technol. 31, no. 9, 1383 (2013)), or by full field reconstruction and adaptive optics in the digital domain by application of digital coherent receivers at each aperture (a proposed scheme and single-polarization fiber-based demonstration is given e.g. in T. M. Yarnall et al., "Multi-Aperture Digital Coherent Combining for Next-Generation Optical Communication Receivers", Proc. International Conference on Space Optical Systems and Applications IEEE ICSOS (2015)).

However, the above and other conventional approaches suffered from deficiencies in that TX and RX resources are not used/shared efficiently (power fades in a single channel may last fractions of a second so that latency critical applications (such as 5G applications requiring some ms) can't be transmitted), that current spatial diverse setups at most share TX components but apply separate amplifiers and receivers for each aperture, and/or that stable active coherent superposition of optical signals requires complex fast feedback control circuitry (fiber phase shifters have limited range, mechanical control in free-space (e.g., piezo pistons) is costly, lossy etc.).

A space diversity communication system is described in US 3,536,922. Another system for optical wireless communication is known from US 7,106,971 B1.

## SUMMARY

It is an object of the present invention to provide a spatial diverse optical free-space transmission system with high efficiency and less complexity.

The foregoing and other objects are achieved by the features of the independent claims. Further implementation forms are apparent from the dependent claims, the description and figures. According to a first aspect there is provided an apparatus for transmitting an optical transmission signal via separated free-space optical paths of a spatial diverse free-space optical transmission system, said apparatus comprising: a transmitter for generating said optical transmission signal and for coupling said optical transmission signal into a first optical fiber; a polarization beam splitter for directing a first polarization component of said optical transmission signal from said first optical fiber to a second optical fiber and for directing a second polarization component of said optical transmission signal from said first optical fiber to a third optical fiber; a first fiber-to-free space coupler for coupling said first polarization component from said second optical fiber to a first free-space optical path; and a second fiber-to-free space coupler for coupling said second polarization component from said third optical fiber to a second free-space optical path.

According to a second aspect, there is provided an apparatus for receiving an optical reception signal from separated free-space optical paths of a spatial diverse free-space optical transmission system, said apparatus comprising: a first fiber-to-free space coupler for coupling a first polarization component of said optical reception signal from a first free-space optical path to a second polarization-maintaining optical fiber; a second fiber-to-free space coupler for coupling a second polarization component of said optical reception signal from a second free-space optical path to a third polarization-maintaining optical fiber; a polarization beam combiner for directing said first polarization component from said second optical fiber to a first optical fiber and for directing said second polarization component from said third optical fiber to said first optical fiber; a receiver for receiving said first and second polarization components from said first optical fiber; and signal processing means for performing time or phase alignment of said first and second polarization components in the digital domain.

According to a third aspect, there is provided a method of transmitting an optical transmission signal via separated free-space optical paths of a spatial diverse free-space optical transmission system, said method comprising the steps of: generating said optical transmission signal and coupling said optical transmission signal into a first optical fiber; directing a first polarization component of said optical transmission signal from said first optical fiber to a second optical fiber and directing a second polarization component of said optical transmission signal from said first optical fiber to a third optical fiber; coupling said first polarization component from said second optical fiber to a first free-space optical path; and coupling said second polarization component from said third optical fiber to a second free-space optical path.

According to a fourth aspect, there is provided a method of receiving an optical reception signal from separated free-space optical paths of a spatial diverse free-space optical transmission system, said method comprising the steps of: coupling a first polarization component of said optical reception signal from a first free-space optical path to a second optical fiber; coupling a second polarization component of said optical reception signal from a second free-space optical path to a third optical fiber; directing said first polarization component from said second optical fiber to a first optical fiber and directing said second polarization component from said third optical fiber to said first optical fiber; receiving said first and second polarization components from said first optical fiber; and performing time or phase alignment of said first and second polarization components in the digital domain.

Accordingly, an improved spatial diverse free-space optical transmission system is proposed, which provides single TX and single RX setup based on splitting and recombination of polarization orthogonal free space optical signals transmitted along disjoint paths. Thereby, fading correlation can be minimized. Each transmission direction can share optical booster amplifier and preamplifier and only one polarization beam splitter is required at each terminal. Moreover, stable passive beam combining at the polarization beam combiner can be achieved and path length fluctuations, which all spatial diverse systems face, can be compensated by usage of channel state information (as the system is reciprocal) and adaptive subcarrier modulation or can be entirely removed by digital signal processing (DSP) after coherent signal detection.

It is noted that the signal processing means of the above apparatus according to the second aspect may be implemented based on discrete hardware circuitry with discrete hardware components, integrated chips, or arrangements of chip modules, or based on a signal processing device or chip controlled by a software routine or program stored in a memory, written on a computer-readable medium, or downloaded from a network, such as the internet.

According to a first implementation of the apparatus according to the second aspect, the receiver may comprise a direct detection receiver. This allows a simple receiver structure which generally requires only a photodetector for detection. There is no need to estimate any frequency and phase offset due to the elimination of local oscillators and optical hybrids. Moreover, channel estimation can be done at the receiver side without any link information.

According to a second implementation of the apparatus according to the second aspect, the receiver may comprise a digital coherent receiver. This enables high accuracy and wide range compensation of waveform distortion beyond the limits of optical dispersion compensators, and enables smaller optical dispersion compensators and optical amplifiers that are used to compensate for the losses.

According to a third implementation of the apparatus according to the first or second implementation of the second aspect or the first or second aspect as such, the first and second fiber-to-free space couplers may each comprise a collimator or a telescope coupler. Thereby, the fiber-to-free space coupler can be implemented in a simple and efficient passive way.

According to a fourth implementation of the apparatus according to any preceding implementations of the second aspect or the first or second aspect as such, at least one of the first and second fiber-to-free space couplers may comprise a controllable mirror element. Such a passive coupling element provides stability and good controllability.

According to a fifth implementation of the apparatus according to the fourth implementation of the second aspect, the controllable mirror element may comprise a piezo-controllable mirror element. Piezo-based controlling offers exact mechanical adjustment via an electric control signal.

According to a sixth implementation of the apparatus according to any preceding implementation of the second aspect or the first or second aspect as such, the first and second fiber-to-free space couplers may each comprise an aperture placed at a distance further than a maximum correlation length of an impairment on said first and second free-space optical paths. If the distance of the apertures of the two parallel optical paths exceeds the maximum correlation distance of the impairment (which depends on the transmission distance), the optical paths are impaired independently by turbulence, so that their wavefront distortions etc. are no longer correlated.

According to a fifth aspect, a transceiver device is provided, which comprises an apparatus according to the first aspect and an apparatus according to the second aspect, and which further comprises a directional coupler for coupling the optical transmission signal from the transmitter into the first optical fiber and for coupling the first and second polarization components from the first optical fiber to the receiver.

According to a first implementation of the transceiver device according to fifth aspect, the directional coupler may comprise a circulator or a wavelength division multiplexer. Thereby, good and efficient separation of the outgoing and incoming optical signals can be achieved.

According to a second implementation of the transceiver device according to the first implementation or the fifth aspect as such, further signal processing means may be provided to modify signal generation (modulation/coding) according to channel estimation accomplished with the receiver. Due to the single TX and single RX setup, transmission on both optical paths can be jointly controlled at the transceiver device.

According to a third implementation of the transceiver device according to the first or second implementation or the fifth aspect as such, the signal processing means may be adapted to remove path length fluctuations by digital signal processing after coherent signal detection at the receiver. Thereby, alignment can efficiently be achieved in the digital domain.

Embodiments of the invention can be implemented in hardware or any combination of hardware and software.

It shall further be understood that a preferred embodiment of the invention can also be any combination of the implementations of the aspects or above embodiments with the respective aspects as such.

These and other aspects of the invention will be apparent and elucidated with reference to the embodiments described hereinafter.

BRIEF DESCRIPTION OF THE DRAWINGS

In the following detailed portion of the present disclosure, the invention will be explained in more detail with reference to an exemplary embodiment shown in the drawings, in which:

Fig. 1　shows a schematic block diagram of a spatial diverse free-space optical transmission system according to an embodiment of the present invention;

Fig. 2    shows two schematic terminals at opposed connecting ends of a transmission systems in (a) an unperturbed situation and (b) with unbalanced path lengths due to external influences;

Fig. 3    shows a diagram with experimental results of bit error rates (BER) for transmission of discrete multi-tone (DMT) signals over spatial diverse paths and polarization combining;

Fig. 4    shows a diagram with optical signal-to-noise ratio (OSNR) curves for single branch, two paths of equal length and two paths of different length transmssion; and

Fig. 5    shows a diagram of exact and approximated ergodic bit error rate (BER) over signal-to-noise ratio for BPSK maximal ratio combining (MRC) and differential PSK (DPSK) selection combining (SC) for different aperture counts.

Identical reference signs are used for identical or at least functionally equivalent features.

DETAILED DESCRIPTION

In the following embodiment, a cost-efficient two-branch full duplex path diverse free-space optical transmission system with orthogonal polarizations in both branches is described. It offers similar power budget and diversity gain as a coherent combination of optical signals, but can be implemented with passive components and a more stable way. The optical free-space channel can be assumed to be polarization maintaining. For further details, refer to J. Zhang et al.:"Theoretical and experimental studies of polarization fluctuations over atmospheric turbulent channels for wireless optical communication systems", Opt. Expr. 22, no. 22, 32482 (2014).

In particular, the embodiment enables path diverse free space optical transmission with maximum sharing of hardware elements and shifting time (and phase, in case of coherent detection) alignment to digital domain.

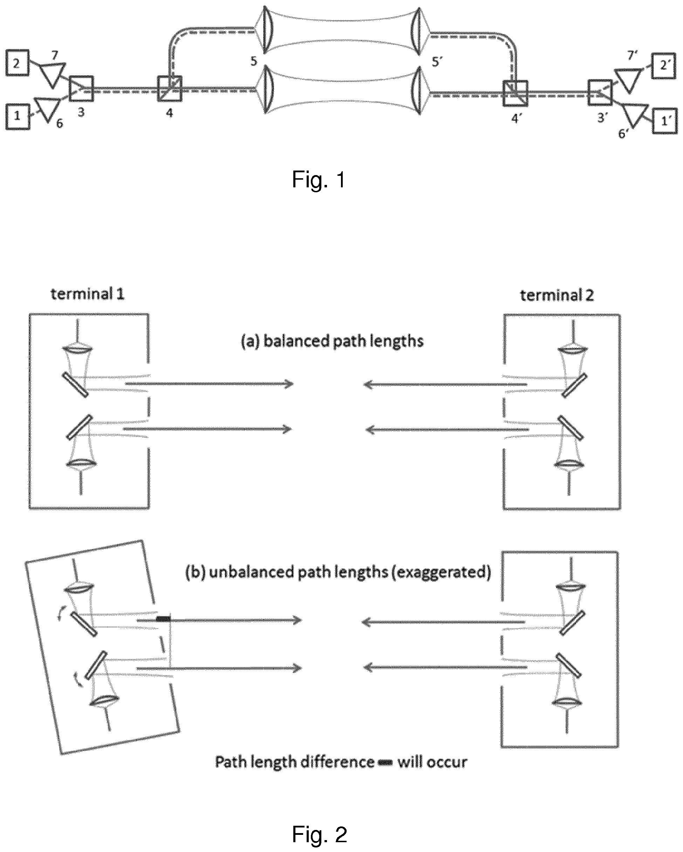

Fig. 1 shows a schematic block diagram of the spatial diverse free-space optical transmission system according to the embodiment which comprises full duplex two-branch path diverse free space optical transmission with polarization combining. A single polarization transmitter 1 and a direct-detection or digital coherent receiver 2 are provided in a transceiver at a first transmission end. At the transmitter output, a booster amplifier 6 may be provided at an optical fiber which is connected or coupled to a directional coupler 3. The booster amplifier 6 can be used to amplify the signal channels to a level required for launching the optical signal into the fiber link. At the receiver input, an optical pre-amplifier 7 may be provided to amplify a received optical signal to a level where it can be detected over and above the thermal noise of the receiver 2. The optical signal is received via an optical fiber connected or coupled to the directional coupler 3.

The directional coupler 3 may be implemented by a circulator or wavelength division multiplexer (WDM) coupler. The circulator coupler can be a passive device that multiplexes data streams with the same wavelength in the diverse directions. The WDM coupler may be a bi-directional coupler which is also a passive device that allows for optical transmissions in both directions in one fiber.

The directional coupler 3 is coupled via another optical fiber to a polarization beam splitter/combiner 4 where orthogonal polarization components of a transmission signal are directed into different optical fibers and where orthogonal polarization components of a reception signal received via the different optical fibers are combined into the other optical fiber. It can be a passive device based e.g. birefringent materials, splitting light into beams of differing polarization. Each of the two different optical fibers are coupled to respective fiber-to-free space couplers 5 which may be implemented as passive optical collimators or telescopes and which are adapted to generate separated free-space channels through which the orthogonal polarization components are transmitted.

At the other transmission end, the same structure is provided, i.e., respective fiber-to-fee space couplers 5' are provided to couple the FSO signals into respective optical fibers which are coupled at their other ends to a polarization beam splitter/combiner 4' which is connected to a directional coupler 3'. The directional coupler 3' directs the received signal via an optical booster amplifier 7' to a receiver 2' and directs a transmission signal, which is to be transmitted via the two FSO channels and which is received from a transmitter 1' via an optical pre-amplifier 6', to the polarization beam splitter/combiner 4'.

As can be gathered from Fig. 1, a single transmitter 1, 1' and a single receiver 2, 2' is sufficient at both transmission ends due to splitting and recombination of polarization orthogonal free space optical signals transmitted along disjoint paths, so that fading correlation is minimized. Each direction shares an optical booster amplifier 6, 6' and a pre-amplifier 7, 7'. Moreover, only one polarization beam splitter/combiner 4, 4' is required at each transmission end, i.e., at each terminal, and stable passive beam combining is provided due to the passive components. Path length fluctuations - which all spatial diverse systems face - can be compensated either by usage of channel state information (as the system is reciprocal) and adaptive subcarrier modulation at a processing unit (e.g. DSP) of the respective transmitters 1, 1' or can be entirely removed by a processing unit (e.g.

DSP) after coherent signal detection at the respective receivers 2, 2'.

An important point to be addressed are path length differences D, either due to manufacturing or due to environmental impairments (storm etc). As an example, the standard requirement for an aperture distance of 20cm between the respective two fiber-to-free space couplers 5, 5' at both transmission ends and at a pitch or yaw of +/-3° is D ~ 1cm.

Fig. 2 shows two schematic terminals at opposed connecting ends of a transmission systems in (a) an unperturbed situation and (b) with unbalanced path lengths due to external influences leading to the emergence of optical path length differences.

In case the reveicers 2, 2' are implemented as direct detection receivers (DD RX), path length difference may induce spectral power fading. For strong wind inducing pitch and yaw of the FSO terminals which may be mounted at poles, beam pointing deviations of several tens of mrad may occur which have to be tracked and compensated, e.g. by piezo-controllable mirrors provided in the fiber-to-free space couplers 5, 5'. If narrow-width signals are transmitted with sufficient spectral distance to power fading frequencies sufficient path length difference tolerance is ensured to cope with most adverse environmental conditions.

On the other hand, if a signal spectrum is spanning over power fading frequencies and a DD-RX is applied, discrete multi-tone (DMT) signals may be used with power and bit loading according to the instantaneous channel conditions.

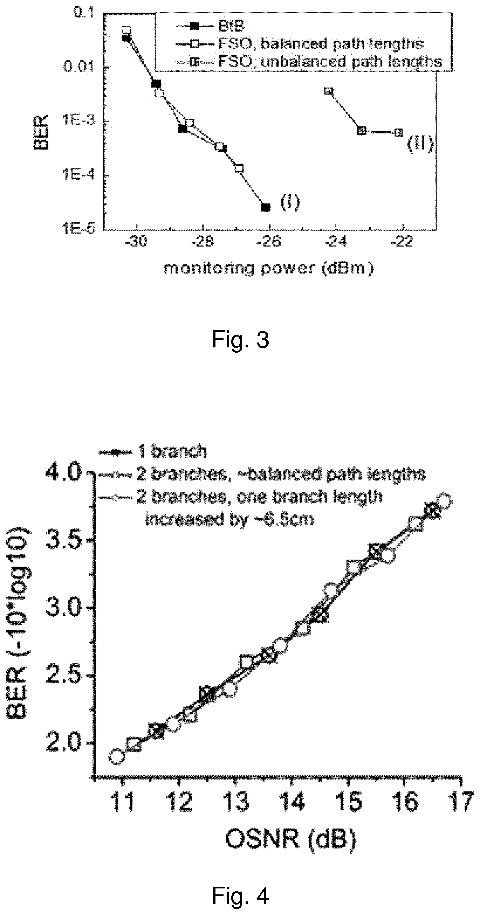

Fig. 3 shows a diagram with experimental results of bit error rates (BER) for transmission of DMT signals over spatial diverse paths and polarization combining.

For balanced paths (I) no performance loss due to the two-branch setup is observed with respect to back-to-back (BtB) transmission, where the transmitter is directly connected to the receiver without a transmission medium in between. Introducing a path length difference (II) of 2.1cm reduces the effective bandwidth. Due to reciprocity of the proposed passive setup of the present embodiment no feedback channel is required but channel estimation can be done at the transmitter 1, 1' via the received signal and subsequent bit and power loading is enabled. However, for uncorrelated fading, dips in the signal-to-noise ratio (SNR) will be much less pronounced, as the reception power for the respective spatial diverse paths will be less balanced during strong fading.

In case the reveicers 2, 2' are implemented as digital coherent receivers for coherent detection, higher sensitivity and thus more margin is offered, so that the transmission system is virtually insensitive to path length differences, as delay can be compensated by tap-delay filters.

Fig. 4 shows a diagram with optical signal-to-noise ratio (OSNR) curves for single branch, two paths of equal length and two paths of different length transmission. In the underlying experiment, coherent receiving of a 34Gbaud single polarization QPSK signal has been used.

The OSNR curves of Fig. 4 indicate the situation for a transmission via a single branch, two optical paths of equal length, and two paths of 6.5cm length difference transmission. As can be gathered from Fig. 4, coherent receiving together with digital signal processing renders the transmission system of Fig. 1 completely insensitive to path length (or power balance) differences. A manually enlarged optical path in one branch of about 6.5cm is reflected in change of tap coefficients of the filters implemented by the digital signal processing. The related delay corresponds to traversing additional 6.38cm of free space path.

In summary, the present invention relates to an apparatus and method of transmitting and/or receiving an optical transmission signal via separated free-space optical paths of a spatial diverse free-space optical transmission system, wherein a first polarization component of the optical transmission signal is directed from a first optical fiber to a second optical fiber and wherein a second polarization component of the optical transmission signal is directed from the first optical fiber to a third optical fiber, wherein the first polarization component is coupled from the second optical fiber to a first free-space optical path and the second polarization component is coupled from the third optical fiber to a second free-space optical path, and wherein time or phase alignment of the first and second polarization components is performed in the digital domain.

While the invention has been illustrated and described in detail in the drawings and the foregoing description, such illustration and description are to be considered illustrative or exemplary and not restrictive. The invention is not limited to the disclosed embodiment. From reading the present disclosure, other modifications will be apparent to a person skilled in the art. Such modifications may involve other features which are already known in the art and which may be used instead of or in addition to features already described herein. Rather, the present invention can be applied to any FSO transmission system. The transmitter and receiver device of the proposed system can be implemented in discrete hardware or based on software routines for controlling signal processors at the transmission and reception side.

The invention has been described in conjunction with various embodiments herein. However, other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage.

Although the present invention has been described with reference to specific features and embodiments thereof, it is evident that various modifications and combinations can be made thereto without departing from the scope of the invention. The specification and drawings are, accordingly, to be regarded simply as an illustration of the invention as defined by the appended claims, and are contemplated to cover any and all modifications, variations, combinations or equivalents that fall within the scope of the present invention.

**Claims**

1. An apparatus for receiving an optical reception signal from separated free-space optical paths of a spatial diverse free-space optical transmission system, said apparatus comprising:

    - a first fiber-to-free space coupler (5, 5') for coupling a first polarization component of said optical reception signal from a first free-space optical path to a second polarization-maintaining optical fiber;
    - a second fiber-to-free space coupler (5, 5') for coupling a second polarization component of said optical reception signal from a second free-space optical path to a third polarization-maintaining optical fiber;
    - a polarization beam combiner (4, 4') for directing said first polarization component from said second optical fiber to a first optical fiber and for directing said second polarization component from said third optical fiber to said first optical fiber; and
    - a receiver (2, 2') for receiving said first and second polarization components from said first optical fiber; **characterized in that** the apparatus further comprises
    - signal processing means for performing time or phase alignment of said first and second polarization components in the digital domain.

2. The apparatus according to claim 1, wherein said receiver comprises a direct detection receiver.

3. The apparatus according to claim 1, wherein said receiver comprises a digital coherent receiver.

4. The apparatus according to any one of the preceding claims, wherein said first and second fiber-to-free space couplers each comprise a collimator or a telescope coupler.

5. The apparatus according to any one of the preceding claims, wherein at least one of said first and second fiber-to-free space couplers comprises a controllable mirror element.

6. The apparatus of claim 5, wherein said controllable mirror element comprises a piezo-controllable mirror element.

7. The apparatus according to any one of the preceding claims, wherein said first and second fiber-to-free space couplers each comprise an aperture placed further than a maximum correlation length of an impairment on said first and second free-space optical paths.

8. A transceiver device comprising an apparatus for transmitting an optical transmission signal via separated free-space optical paths of a spatial diverse free-space optical transmission system, said apparatus comprising:

    - a transmitter (1, 1') for generating said optical transmission signal and for coupling said optical transmission signal into a first optical fiber;
    - a polarization beam splitter (4, 4') for directing a first polarization component of said optical transmission signal from said first optical fiber to a second optical fiber and for directing a second polarization component of said optical transmission signal from said first optical fiber to a third optical fiber;
    - a first fiber-to-free space coupler (5, 5') for coupling said first polarization component from said second optical fiber to a first free-space optical path; and
    - a second fiber-to-free space coupler (5, 5') for coupling said second polarization component from said third optical fiber to a second free-space optical path; wherein the transceiver device further comprises an apparatus according to claim 1, and further comprising a directional coupler for coupling said optical transmission signal from said transmitter into said first optical fiber and for coupling said first and second polarization components from said first optical fiber to said receiver.

9. The transceiver device according to claim 8, wherein said directional coupler comprises a circulator or a wavelength division multiplexer.

10. The transceiver device according to claim 8 or 9, wherein further signal processing means are provided to modify signal generation according to channel estimation accomplished with said receiver.

11. The transceiver device according to any one of claims 8 to 10, wherein said signal processing means are adapted to remove path length fluctuations by digital signal processing after coherent signal detection at said receiver.

12. A method of receiving an optical reception signal from separated free-space optical paths of a spatial diverse free-space optical transmission system, said method comprising the steps of:

- coupling a first polarization component of said optical reception signal from a first free-space optical path to a second optical fiber;
- coupling a second polarization component of said optical reception signal from a second free-space optical path to a third optical fiber;
- directing said first polarization component from said second optical fiber to a first optical fiber and directing said second polarization component from said third optical fiber to said first optical fiber; and
- receiving said first and second polarization components from said first optical fiber;

**characterized in that** the method further comprises the step of:

- performing time or phase alignment of said first and second polarization components in the digital domain.

**Patentansprüche**

1. Vorrichtung zum Empfangen eines optischen Empfangssignals aus getrennten optischen Freiraumwegen eines räumlich diversen optischen Freiraumübertragungssystems, die Vorrichtung umfassend:

- einen ersten Faser-zu-Freiraum-Koppler (5, 5') zum Einkoppeln einer ersten Polarisationskomponente des optischen Empfangssignals von einem ersten optischen Freiraumpfad in eine zweite polarisationserhaltende optische Faser;
- einen zweiten Faser-zu-Freiraum-Koppler (5, 5') zum Einkoppeln einer zweiten Polarisationskomponente des optischen Empfangssignals von einem zweiten optischen Freiraumpfad in eine dritte polarisationserhaltende optische Faser;
- einen Polarisationsstrahlkombinierer (4, 4') zum Leiten der ersten Polarisationskomponente von der zweiten optischen Faser zu einer ersten optischen Faser und zum Leiten der zweiten Polarisationskomponente von der dritten optischen Faser zu der ersten optischen Faser; und
- einen Empfänger (2, 2') zum Empfangen der ersten und zweiten Polarisationskomponente von der ersten optischen Faser;

**dadurch gekennzeichnet, dass** die Vorrichtung ferner umfasst:

- Signalverarbeitungsmittel zum Durchführen einer Zeit- oder Phasenausrichtung der ersten und zweiten Polarisationskomponente im digitalen Bereich.

2. Vorrichtung nach Anspruch 1, wobei der Empfänger einen Direkterkennungsempfänger umfasst.

3. Vorrichtung nach Anspruch 1, wobei der Empfänger einen digitalen kohärenten Empfänger umfasst.

4. Vorrichtung nach einem der vorhergehenden Ansprüche, wobei der erste und der zweite Faser-zu-Freiraum-Koppler jeweils einen Kollimator oder einen Teleskopkoppler umfassen.

5. Vorrichtung nach einem der vorhergehenden Ansprüche, wobei mindestens einer von dem ersten und zweiten Faser-zu-Freiraum-Koppler ein steuerbares Spiegelelement umfasst.

6. Vorrichtung nach Anspruch 5, wobei das steuerbare Spiegelelement ein piezosteuerbares Spiegelelement aufweist.

7. Vorrichtung nach einem der vorhergehenden Ansprüche, wobei der erste und der zweite Faser-zu-Freiraum-Koppler jeweils eine Öffnung aufweisen, die weiter entfernt als eine maximale Korrelationslänge einer Beeinträchtigung auf dem ersten und dem zweiten optischen Freiraumpfad angeordnet ist.

8. Transceivervorrichtung, umfassend eine Vorrichtung zum Übertragen eines optischen Sendesignals über getrennte optische Freiraumwege eines räumlich diversen optischen Freiraumübertragungssystems, die Vorrichtung umfassend:

- einen Sender (1, 1') zum Erzeugen des optischen Sendesignals und zum Einkoppeln des optischen Sendesignals in eine erste optische Faser;
- einen Polarisationsstrahlteiler (4, 4') zum Leiten einer ersten Polarisationskomponente des optischen Sendesignals von der ersten optischen Faser zu einer zweiten optischen Faser und zum Leiten einer zweiten Polarisationskomponente des optischen Sendesignals von der ersten optischen Faser zu einer dritten optischen Faser;
- einen ersten Faser-zu-Freiraum-Koppler (5, 5') zum Einkoppeln der ersten Polarisationskomponente der zweiten optischen Faser in einen ersten optischen Freiraumpfad; und

- einen zweiten Faser-zu-Freiraum-Koppler (5, 5') zum Einkoppeln der zweiten Polarisationskomponente der dritten optischen Faser in einen zweiten optischen Freiraumpfad; wobei die Transceivervorrichtung ferner umfasst:

die Vorrichtung nach Anspruch 1,
und ferner einen Richtungskoppler zum Einkoppeln des optischen Sendesignals von dem Sender in die erste optische Faser und zum Einkoppeln der ersten und zweiten Polarisationskomponente von der ersten optischen Faser in den Empfänger umfasst.

9. Transceivervorrichtung nach Anspruch 8, wobei der Richtungskoppler einen Zirkulator oder einen Wellenlängenmultiplexer umfasst.

10. Transceivervorrichtung nach Anspruch 8 oder 9, wobei weitere Signalverarbeitungsmittel bereitgestellt werden, um die Signalerzeugung gemäß der mit dem Empfänger durchgeführten Kanalschätzung zu modifizieren.

11. Transceivervorrichtung nach einem der Ansprüche 8 bis 10, wobei die Signalverarbeitungsmittel dazu vorgesehen sind, Pfadlängenschwankungen durch die digitale Signalverarbeitung nach kohärenter Signaldetektion am Empfänger zu entfernen.

12. Verfahren zum Empfangen eines optischen Empfangssignals aus getrennten optischen Freiraumwegen eines räumlich diversen optischen Freiraumübertragungssystems, das Verfahren die folgenden Schritte umfassend:

- Einkoppeln einer ersten Polarisationskomponente des optischen Empfangssignals von einem ersten optischen Freiraumpfad in eine zweite optische Faser;
- Einkoppeln einer zweiten Polarisationskomponente des optischen Empfangssignals von einem zweiten optischen Freiraumpfad in eine dritte optische Faser;
- Leiten der ersten Polarisationskomponente von der zweiten optischen Faser zu einer ersten optischen Faser und Leiten der zweiten Polarisationskomponente von der dritten optischen Faser zu der ersten optischen Faser; und
- Empfangen der ersten und zweiten Polarisationskomponente von der ersten optischen Faser;

**dadurch gekennzeichnet, dass** das Verfahren ferner folgenden Schritt umfasst:

- Durchführen einer Zeit- oder Phasenausrichtung der ersten und zweiten Polarisationskomponente im digitalen Bereich.

## Revendications

1. Appareil de réception d'un signal de réception optique en provenance de trajets optiques d'espace libre séparés d'un système d'émission optique d'espace libre divers spatial, ledit appareil comprenant :

un premier coupleur fibre-espace libre (5, 5') pour coupler une première composante de polarisation dudit signal de réception optique d'un premier trajet optique d'espace libre à une deuxième fibre optique à maintien de polarisation ;
un second coupleur fibre-espace libre (5, 5') pour coupler une seconde composante de polarisation dudit signal de réception optique d'un second trajet optique d'espace libre à une troisième fibre optique à maintien de polarisation ;
un combinateur de faisceaux à polarisation (4, 4') pour diriger ladite première composante de polarisation de ladite deuxième fibre optique à une première fibre optique et pour diriger ladite seconde composante de polarisation de ladite troisième fibre optique à ladite première fibre optique ; et
un récepteur (2, 2') pour recevoir lesdites première et seconde composantes de polarisation en provenance de ladite première fibre optique ;

l'appareil étant **caractérisé en ce qu'**il comprend en outre :
un moyen de traitement de signaux pour réaliser un alignement de temps ou de phase desdites première et seconde composantes de polarisation dans le domaine numérique.

2. Appareil selon la revendication 1, dans lequel ledit récepteur comprend un récepteur à détection directe.

3. Appareil selon la revendication 1, dans lequel ledit récepteur comprend un récepteur cohérent numérique.

4. Appareil selon l'une quelconque des revendications précédentes, dans lequel les premier et second coupleurs fibre-espace libre comprennent chacun un collimateur ou un coupleur télescopique.

5. Appareil selon l'une quelconque des revendications précédentes, dans lequel au moins un des premier et second coupleurs fibre-espace libre comprend un élément miroir pouvant être commandé.

6. Appareil selon la revendication 5, dans lequel ledit élément miroir pouvant être commandé comprend un élément miroir à commande piézoélectrique.

7. Appareil selon l'une quelconque des revendications précédentes, dans lequel lesdits premier et second coupleurs fibre-espace libre comprennent chacun une ouverture placée plus loin qu'une longueur de corrélation maximale d'une perturbation sur lesdits premier et second trajets optiques d'espace libre.

8. Dispositif émetteur-récepteur comprenant un appareil d'émission d'un signal d'émission optique par l'intermédiaire de trajets optiques d'espace libre séparés d'un système d'émission optique d'espace libre divers spatial, ledit appareil comprenant :

un émetteur (1, 1') pour générer ledit signal d'émission optique et pour coupler ledit signal d'émission optique dans une première fibre optique ;
un séparateur de faisceaux à polarisation (4, 4') pour diriger une première composante de polarisation dudit signal d'émission optique de ladite première fibre optique à une deuxième fibre optique et pour diriger une seconde composante de polarisation dudit signal d'émission optique de ladite première fibre optique à une troisième fibre optique ;
un premier coupleur fibre-espace libre (5, 5') pour coupler ladite première composante de polarisation de ladite deuxième fibre optique à un premier trajet optique d'espace libre ; et
un second coupleur fibre-espace libre (5, 5') pour coupler ladite seconde composante de polarisation de ladite troisième fibre optique à un second trajet optique d'espace libre ; le dispositif émetteur-récepteur comprenant en outre un appareil selon la revendication 1 et comprenant en outre un coupleur directionnel pour coupler ledit signal d'émission optique dudit émetteur dans ladite première fibre optique et pour coupler lesdites première et seconde composantes de polarisation de ladite première fibre optique audit récepteur.

9. Dispositif émetteur-récepteur selon la revendication 8, dans lequel ledit coupleur directionnel comprend un circulateur ou un multiplexeur par répartition en longueur d'onde.

10. Dispositif émetteur-récepteur selon la revendication 8 ou 9, dans lequel d'autres moyens de traitement de signaux sont fournis pour modifier la génération de signaux selon une estimation de canal accomplie avec ledit récepteur.

11. Dispositif émetteur-récepteur selon l'une quelconque des revendications 8 à 10, dans lequel lesdits moyens de traitement de signaux sont conçus pour éliminer les fluctuations de longueur de trajet au moyen d'un traitement de signaux numérique après une détection de signaux cohérente au niveau dudit récepteur.

12. Procédé de réception d'un signal de réception optique en provenance de trajets optiques d'espace libre séparés d'un système d'émission optique d'espace libre divers spatial, ledit procédé consistant à :

coupler une première composante de polarisation dudit signal de réception optique d'un premier trajet optique d'espace libre à une deuxième fibre optique ;
coupler une seconde composante de polarisation dudit signal de réception optique d'un second trajet optique d'espace libre à une troisième fibre optique ;
diriger ladite première composante de polarisation de ladite deuxième fibre optique à une première fibre optique et diriger ladite seconde composante de polarisation de ladite troisième fibre optique à ladite première fibre optique ; et
recevoir lesdites première et seconde composantes de polarisation en provenance de ladite première fibre optique ;

le procédé étant **caractérisé en ce qu'**il comprend en outre l'étape consistant à :
réaliser un alignement de temps ou de phase desdites première et seconde composantes de polarisation dans le domaine numérique.

Fig. 1

terminal 1      terminal 2

(a) balanced path lengths

(b) unbalanced path lengths (exaggerated)

Path length difference ▬ will occur

Fig. 2

Fig. 3

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7106971 B1

- US 3536922 A

### Non-patent literature cited in the description

- **F. YANG et al.** Coherent Free-Space Optical Communications in Lognormal-Rician Turbulence. *IEEE Comm. Lett.,* 2012, vol. 16 (11), 1872
- **S.-H. HWANG et al.** SIM/SM-Aided Free-Space Optical Communication With Receiver Diversity. *J. Lightw. Technol.,* 2014, vol. 32 (14), 2443
- **A. BELMONTE et al.** Sequential Optimization of Adaptive Arrays in Coherent Laser Communications. *J. Lightw. Technol.,* 2013, vol. 31 (9), 1383

- **T. M. YARNALL et al.** Multi-Aperture Digital Coherent Combining for Next-Generation Optical Communication Receivers. *Proc. International Conference on Space Optical Systems and Applications IEEE IC-SOS,* 2015
- **J. ZHANG et al.** Theoretical and experimental studies of polarization fluctuations over atmospheric turbulent channels for wireless optical communication systems. *Opt. Expr.,* 2014, vol. 22 (22), 32482